# EUROPEAN PATENT APPLICATION

(11) **EP 4 529 291 A1**
(43) Date of publication of application: **26.03.2025**
(21) Application number: 23869791.6
(22) Date of filing: 27.06.2023
(51) Int. Cl.: H04W 52/02

(54) **COMMUNICATION METHOD, NETWORK DEVICE, AND TERMINAL**

(30) Priority: 29.09.2022 CN 202211201654
(71) Applicant: ZTE CORPORATION, Shenzhen, Guangdong 518057 (CN)
(72) Inventor: NIU, Li, Shenzhen, Guangdong 518057 (CN); GAO, Yuan, Shenzhen, Guangdong 518057 (CN); SHA, Xiubin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/102856
(87) International publication number: WO 2024/066543

(57) **Abstract**

The present application relates to the technical field of communications, and discloses are a communication method, a network device, and a terminal. The communication method in embodiments of the present application comprises: sending first information, wherein the first information is used for instructing or configuring at least one of the following: sending a paging message by means of a secondary carrier or a secondary cell; a network device stopping receiving uplink transmission; and the network device stopping sending downlink transmission.

## Description

### CROSS REFERENCE

The present application claims priority to Chinese patent application No. 202211201654.1, filed with the CNIPA on September 29, 2022, entitled 'COMMUNICATION METHOD, NETWORK DEVICE, AND TERMINAL', the entire content of which is incorporated herein by reference.

### TECHNICAL FIELD

The present application relates to the field of communication technology, and in particular to a communication method, a network device, and a terminal.

### BACKGROUND

With the continuous development and application of communication technology such as the 5th Generation (5G), the problem of high power consumption of communication devices such as base stations gradually becomes prominent. Therefore, how to reduce the energy consumption of communication devices such as base stations becomes an urgent problem to be solved at present.

### SUMMARY

Embodiments of the present application provide a communication method, a network device, and a terminal, which can solve the problem of high energy consumption of communication devices such as base stations.

In a first aspect, a communication method is provided, the method comprises: sending first information, wherein the first information is used to instruct or configure at least one of the following: sending a paging message by a secondary carrier or a secondary cell; a network device stopping receiving uplink transmission; and the network device stopping sending downlink transmission.

In a second aspect, a communication method is provided, the method comprises: receiving first information, wherein the first information is used to instruct or configure at least one of the following: sending a paging message by a secondary carrier or a secondary cell; a network device stopping receiving uplink transmission; and the network device stopping sending downlink transmission.

**In** a third aspect, a communication apparatus is provided, the apparatus comprises a sending module for sending first information, wherein the first information is used to instruct or configure at least one of the following: sending a paging message by a secondary carrier or a secondary cell; a network device stopping receiving uplink transmission; and the network device stopping sending downlink transmission.

**In** a fourth aspect, a communication apparatus is provided, the apparatus comprises a receiving apparatus for receiving first information, wherein the first information is used to instruct or configure at least one of the following: sending a paging message by a secondary carrier or a secondary cell; a network device stopping receiving uplink transmission; and the network device stopping sending downlink transmission.

**In** a fifth aspect, a terminal is provided, the terminal comprises a processor and a memory, the memory stores a program or instruction that can run on the processor, and the program or instruction, when executed by the processor, implements the steps of the method of the second aspect.

**In** a sixth aspect, a terminal is provided, the terminal comprises a processor and a communication interface, wherein the communication interface is coupled to the processor, the processor is used to execute a program or instruction so as to implement the steps of the method of the second aspect.

In a seventh aspect, a network device is provided, the network device comprises a processor and a memory, the memory stores a program or instruction that can run on the processor, and the program or instruction, when executed by the processor, implements the steps of the method of the first aspect.

In an eighth aspect, a network device is provided, the network device comprises a processor and a communication interface, wherein the communication interface is coupled to the processor, the processor is used to execute a program or instruction so as to implement the steps of the method of the first aspect.

In a ninth aspect, a communication system is provided, the communication system comprises a terminal and a network device, the terminal can be used to execute the steps of the communication method of the second aspect, the network device can be used to execute the steps of the communication method of the first aspect.

In a tenth aspect, a readable storage medium is provided, the readable storage medium stores a program or instruction thereon, and the program or instruction, when executed by the processor, implements the steps of the method of the first aspect, or implements the steps of the method of the second aspect.

In an eleventh aspect, a chip is provided, the chip comprises a processor and a communication interface, the communication interface is coupled to the processor, the processor is used to execute a program or instruction so as to implement the steps of the method of the first aspect, or to implement the steps of the method of the second aspect.

In a twelfth aspect, a computer program product/program product is provided, the computer program product/program product is stored in a storage medium, and the computer program product/program product is executed by at least one processor, so as to implement the steps of the method of the first aspect, or to implement the steps of the method of the second aspect.

### BRIEF DESCRIPTION OF DRAWINGS

FIG. 1 is a schematic structural diagram of a wireless communication system provided in an exemplary embodiment of the present application;
FIG. 2 is a schematic flow chart of a communication method provided in an exemplary embodiment of the present application;
FIG. 3 is a schematic flow chart of a communication method provided in another exemplary embodiment of the present application;
FIG. 4 is a schematic flow chart of a communication method provided in another exemplary embodiment of the present application;
FIG. 5 is a schematic flow chart of a communication method provided in another exemplary embodiment of the present application;
FIG. 6 is a schematic structural diagram of a communication apparatus provided in an exemplary embodiment of the present application;
FIG. 7 is a schematic structural diagram of a communication apparatus provided in another exemplary embodiment of the present application;
FIG. 8 is a schematic structural diagram of a terminal provided in an exemplary embodiment of the present application;
FIG. 9 is a schematic structural diagram of a network device provided in an exemplary embodiment of the present application.

### DETAILED DESCRIPTION

Technical solutions in embodiments of the present application will be described clearly below with reference to the accompanying drawings of embodiments of the present application. Obviously, the embodiments to be described are part of the embodiments of the present application rather than all of the embodiments. All other embodiments obtained by those skilled in the art based on embodiments in the present application fall within the scope of the present application.

The terms "first", "second", and the like in the description and in the claims of the application are used to distinguish between similar objects rather than describing a specific order or a sequence. It is to be understood that terms used in such a way may be interchanged where appropriate, so that embodiments of the application can be implemented in an order other than those illustrated or described herein, the objects distinguished by "first" and "second" are generally of one type, and the number of objects is not limited, for example, a first object may refer to one or more objects. In addition, "and/or" in the description and claims denotes at least one of the objects referred to, and the character "/" generally indicates that the objects associated therewith are in an "or" relationship.

It should be note that the technology described in embodiments of the present application is not limited to Long Term Evolution (LTE)/LTE-Advanced (LTE-A) systems, but can also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA), and other systems. The terms "system" and "network" in embodiments of the present application are often used interchangeably, and the described technologies can be used for both the systems and radio technologies that are mentioned above, as well as other systems and radio technologies. The following description describes a New Radio (NR) system for illustrative purposes, and NR terms are used in most of the following description, but these technologies can also be applied to applications other than NR system applications, such as a 6th Generation (6G) communication system.

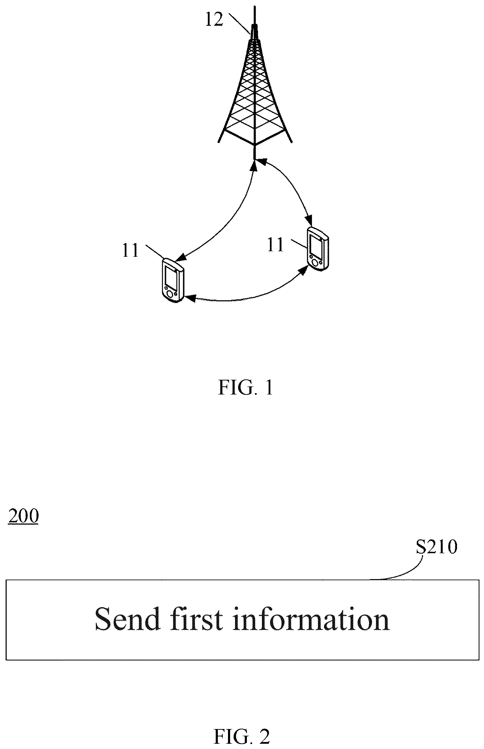

FIG. 1 illustrates a block diagram of a wireless communication system that is applicable to an embodiment of the present application. The wireless communication system comprises a terminal 11 and a network device 12. Here, the terminal 11 can be a mobile phone, a tablet personal computer, a laptop computer (also known as a notebook computer), a personal digital assistant (PDA), a handheld computer, a netbook, an ultra-mobile personal computer (UMPC), a mobile Internet device (MID), an augmented reality (AR)/virtual reality (VR) device, a robot, a wearable device, a vehicle-mounted equipment (VUE), a pedestrian user terminal (PUE), a smart home equipment (home equipment with wireless communication function, such as refrigerator, television, washing machine or furniture, etc.), a game console, a personal computer (PC), an automatic teller machine or a self-service machine and other terminal-side devices. The wearable device includes: smart watch, smart band, smart headset, smart glasses, smart jewelry (smart bangle, smart bracelet, smart ring, smart necklace, smart ankle bangle, smart anklet, etc.), smart wristband, smart clothing, etc. It should be noted that the specific type of the terminal 11 is not limited in embodiments of the present application. The network device 12 can comprise an access network device, the access network device 12 can also be referred to as a radio access network device, a radio access network (RAN), a radio access network function, or a radio access network unit. The access network device 12 can comprise a base station, a Wireless Local Area Network (WLAN) access point, or a WiFi node, etc. The base station can be referred to as a node B, an evolved node B (eNB), an access point, a base transceiver station (BTS), a radio base station, a radio transceiver, a basic service set (BSS), an extended service set (ESS), a home node B, a home evolved node B, a transmitting receiving point (TRP), or other appropriate terms in the art, the base station is not limited to a specific technical term so long as the same technical effect can be achieved. It should be noted that, in embodiments of the present application, only a base station in an NR system is taken as an example for the purpose of illustration, and the specific type of the base station is not limited. The technical solutions provided in embodiments of the application will be described in detail by various embodiments and application scenarios thereof with reference to the accompanying drawings.

As shown in FIG. 2, which is a schematic flow chart of a communication method 200 provided in an exemplary embodiment of the present application, the method 200 can, but is not limited to, be executed by a network device, and specifically can be executed by hardware and/or software installed in the network device. In this embodiment, the method 200 can at least comprise the following steps.

S210, first information is sent.

Wherein the first information is used to instruct or configure at least one of the following (11) - (13).

(11) Sending a paging message by a secondary carrier or a secondary cell.

It is to be understood that, as for (11), in this embodiment, for a cell that is covered by multiple carriers (such as carrier F1, carrier F2), a primary carrier or a primary cell needs to send reference signals (such as synchronization signal and PBCH block (SSB), channel state information-reference signal (CSI-RS), etc.), system information (such as system information of a secondary carrier or a secondary cell, etc.), paging messages, etc., whereas a secondary carrier or a secondary cell does not send reference signals, system information, a paging messages, etc. Therefore, taking into account the heavy paging load of a primary carrier or a primary cell, in this embodiment, paging messages are sent by a secondary carrier or a secondary cell, which can prevent the primary carrier or the primary cell from sending paging messages, as a result, the silence time of the primary carrier or the primary cell is extended and the energy consumption of the network device (such as a base station) is reduced.

(12) The network device stopping receiving uplink transmission.

(13) The network device stopping sending downlink transmission.

It is to be understood that, in one implementation, in addition to instructing or configuring the aforementioned (11) - (13), the first information can further instruct whether the network device is in a silence or energy-saving state, a beginning time when the network device is in a silence or energy-saving state, an ending time when the network device is in a silence or energy-saving state, a duration when the network device is in a silence or energy-saving state, etc., which is not limited by this embodiment.

In addition, in this embodiment, by means of sending first information and a terminal receiving the first information, behaviors between the network device and the terminal can be aligned, such that the terminal and the network device understand silence or energy-saving behaviors of the network device in a consistent manner, which prevents the terminal from performing meaningless signal monitoring and/or sending behaviors while the network device is in a silence or energy-saving state (i.e., sending paging messages by a secondary carrier or a secondary cell, stopping receiving uplink transmission or stopping sending downlink transmission), at the same time, energy consumption of the terminal and the network device is reduced.

In addition, it should be noted that, other than sending the first information, the network device can further perform operations such as sending a paging message by a secondary carrier or a secondary cell, stopping receiving uplink transmission, and stopping sending downlink transmission, so that the network device itself enters a silence or energy-saving state, thereby resulting in reduction in energy consumption. It should be noted that, in this embodiment, there are no specific orders between the operation the network device sends first information and operations such as sending a paging message by a secondary carrier or a secondary cell, stopping receiving uplink transmission, and stopping sending downlink transmission, etc. For example, the network device sends first information at first, followed by sending a paging message by a secondary carrier or a secondary cell, stopping receiving uplink transmission, and stopping sending downlink transmission; alternatively, sending a paging message by a secondary carrier or a secondary cell, stopping receiving uplink transmission, stopping sending downlink transmission at first, and then the network device sends first information, which is not limited here.

In this embodiment, the network device, by sending first information, instructs or configures any one of the following: sending a paging message by a secondary cell or a secondary carrier, the network device stopping receiving uplink transmission, and the network device stopping sending downlink transmission. Therefore, the terminal is prevented from performing meaningless signal monitoring and/or sending behaviors while the network device is in silence or energy-saving state (i.e., sending a paging message by a secondary carrier or a secondary cell, stopping receiving uplink transmission or stopping sending downlink transmission), at the same time, energy consumption of the terminal and the network device is reduced.

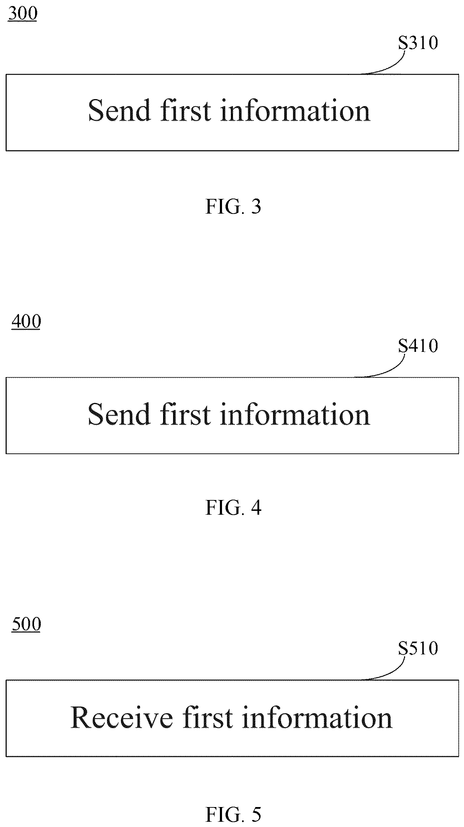

As shown in FIG. 3, which is a schematic flow chart of a communication method 300 provided in an exemplary embodiment of the present application, the method 300 can, but is not limited to, be executed by a network device, and specifically can be executed by hardware and/or software installed in the network device. In this embodiment, the method 300 can at least comprise the following steps.

S310, first information is sent.

Wherein the first information is used to instruct or configure at least one of the following (21) - (23).

(21) Sending a paging message by a secondary carrier or a secondary cell.

(22) The network device stopping receiving uplink transmission.

(23) The network device stopping sending downlink transmission.

It is to be understood that, for the implementation process of the aforementioned (21) - (23), reference can be made to relevant description in the aforementioned method embodiment 200, in order to implement the aforementioned content that is instructed or configured by the first information, in one implementation, the first information can comprise at least one of the following (31) - (37).

(31) First instruction information for instructing the secondary carrier or the secondary cell to send a paging message.

(32) Second instruction information for instructing a terminal to monitor a paging message on the secondary carrier or the secondary cell.

For example, for the aforementioned (31) and (32), the network device can send (such as broadcast) or configure an enabling-or-not instruction (i.e., first instruction information or second instruction information) by a primary carrier or a primary cell, if it is an enabling instruction, then the network device sends a paging message by a secondary carrier or a secondary cell. Alternatively, a primary carrier or a primary cell broadcasts or configures an enabling-or-not instruction (i.e., first instruction information or second instruction information), and the instruction is associated with a secondary carrier or a secondary cell, if it is an enabling instruction, the network device can send a paging message by the associated secondary carrier or secondary cell. Correspondingly, for a terminal, if the network device broadcasts or configures that a secondary carrier or a secondary cell has a paging capability, the terminal can choose to monitor a paging message on the secondary carrier or the secondary cell.

It should be noted that, the aforementioned first instruction information or second instruction information can be an explicit instruction or an implicit instruction, which is not limited here.

(33) Paging resource configuration information corresponding to the secondary carrier or the secondary cell.

For example, the paging resource configuration information can comprise configuration information of physical downlink control channel (PDCCH) for paging, such as frequency-domain resource or time-domain resource of the PDCCH. Based on this, at a paging moment of a secondary carrier or a secondary cell, a terminal can monitor a paging message on the frequency-domain resource of the secondary carrier or the secondary cell, that is, if the network device instructs or configures paging resource configuration information corresponding to the secondary carrier or the secondary cell, the terminal can choose to receive the paging message on the secondary carrier or the secondary cell.

(34) Time information of the paging message monitored by the terminal on the secondary carrier or the secondary cell.

In one implementation, the time information of the paging message monitored by the terminal on the secondary carrier or the secondary cell can comprise: beginning time, period, duration, ending time, etc., of the paging message monitored by the terminal on the secondary carrier or the secondary cell.

(35) Configuration information of secondary carriers or secondary cells that have the same spatial characteristics as those of a primary carrier or a primary cell.

For example, assuming that the spatial characteristic is Quasi co-location (QCL), the network device broadcasts or configures frequency points of some carriers by a primary carrier or a primary cell, and the SSB of the primary carrier or the primary cell has the same QCL relationship as that of these secondary carriers or the secondary cells; alternatively, a primary carrier or a primary cell broadcasts or configures paging resource configuration of some secondary carriers or secondary cells, and the SSB resource of the primary carrier or the primary cell has the same QCL relationship as that of the paging resource. Based on this, if the network device broadcasts or configures some secondary carriers or secondary cells to have the same QCL relationship as that of the primary carrier or the primary cell, it can be determined by the terminal that, by measuring a reference signal of the primary carrier or the primary cell, the QCL relationship between the beam on the secondary carriers or the secondary cells and the paging resource can be obtained.

(36) Time information of the network device stopping receiving uplink transmission.

In one implementation, the time information of the network device stopping receiving uplink transmission comprises at least one of beginning time, ending time, duration, and period of the network device stopping receiving uplink transmission.

(37) Time information of the network device stopping sending downlink transmission.

In one implementation, the time information of the network device stopping sending downlink transmission comprises at least one of beginning time, ending time, duration, and period of the network device stopping sending downlink transmission.

In addition, in another implementation, when a network-side device sends first information, the first information is sent (such as broadcast) by a primary carrier or a primary cell, therefore, at least one of the following conditions (41) - (43) is met.

(41) The first information instructs sending-priority information of a paging message on the secondary carrier or the secondary cell.

In one implementation, the sending-priority of a paging message on the secondary carrier or the secondary cell comprises: the priority of a reference signal of a primary carrier or a primary cell is higher than the priority of a paging message of a secondary carrier or a secondary cell; alternatively, the priority of system information of a primary carrier or a primary cell is lower than the priority of a paging message of a secondary carrier or a secondary cell.

For example, if a network device broadcasts or configures resource of a secondary carrier or a secondary cell that is used for paging by a primary carrier or a primary cell, it can be determined by the terminal that, at the time when a reference signal of the primary carrier or the primary cell is sent, the secondary carrier or the secondary cell will not send a paging message; alternatively, the priority of the reference signal of the primary carrier or the primary cell is higher than that of the paging message of the secondary carrier or the secondary cell; alternatively, at the time when a paging message of the secondary carrier or the secondary cell is sent, the primary carrier or the primary cell will not send system information; alternatively, the priority of paging moment of the secondary carrier or the secondary cell is higher than that of system information of the primary carrier or the primary cell.

(42) A primary carrier or a primary cell meets cell residency conditions, that is, the terminal can reside in a secondary carrier or a secondary cell, so as to enable the sending of a paging message, etc., on the secondary carrier or the secondary cell.

(43) A primary carrier or a primary cell meets an S criterion for cell reselection, that is, a terminal can reside in a secondary carrier or a secondary cell, so as to enable the sending of a paging message, etc., on the secondary carrier or the secondary cell.

Based on the aforementioned description, as one possible implementation, when a terminal receives first information, and the first information instructs or configures at least one of: sending a paging message by a secondary carrier or a secondary cell, a network device stopping sending downlink transmission, and the network device stopping receiving uplink transmission (that is, the network device stops scheduling and sending signals), if a terminal continues monitoring a paging message by a primary carrier or a primary cell, continues monitoring downlink transmission and sending uplink transmission, etc., then the aforementioned behaviors performed by the terminal are meaningless and will result in unnecessary terminal energy-consumption. In this regard, in this embodiment, in order to align behaviors of the network device and the terminal as well as to reduce terminal energy-consumption, the terminal can perform, after receiving the first information, at least one of the following (51) - (58) according to the first information.

(51) When in an idle state or inactive state, reside in or reselect to the secondary carrier or the secondary cell, and monitor a paging message on the secondary carrier or the secondary cell. For example, the terminal can reside in or reselect to the secondary carrier or the secondary cell, and monitor a paging message on the secondary carrier or the secondary cell according to the following: the paging resource configuration information corresponding to the secondary carrier or the secondary cell; the time information of a paging message monitored by the terminal on the secondary carrier or the secondary cell; first instruction information; and second instruction information; etc.

It should be noted that, when the terminal resides in or reselects to the secondary carrier or the secondary cell, it can reside in or reselect to the secondary carrier or the secondary cell according to a terminal identifier. For example, for a primary carrier or a primary cell and a secondary carrier or a secondary cell that is configured with paging configuration, the terminal can select a secondary carrier or a secondary cell to reside in or reselect to according to a terminal identifier (that is, the number of UE identifier mod carriers). For example, there is a primary carrier or a primary cell and N-1 secondary carriers or secondary cells (indexed 1, ..., N-1), and each secondary carrier or secondary cell corresponds to an index, then the carrier for the terminal to reside in is selected according to the result of (UE identifier mod N), if the result is 0, the primary carrier or the primary cell is selected; if it is not zero, the secondary carrier or the secondary cell corresponding to the index is selected according to the result.

In addition, when the terminal is in an idle state or an inactive state, other than residing in or reselecting to the secondary carrier or the secondary cell according to a terminal identifier, the terminal can also reside in or reselect to the secondary carrier or the secondary cell according to second information sent by the network device. This can be understood as follows: taking into account that the network device sends a paging message by a secondary carrier or a secondary cell, correspondingly, when the terminal is in an idle state or an inactive state and/or when the terminal determines that the present time is a paging moment, the terminal needs to reside in the secondary carrier or the secondary cell so as to monitor a paging message. In this regard, in this embodiment, in order to achieve the purpose of the terminal residing in the secondary carrier or the secondary cell so as to monitor a paging message, the second information can be sent, and the second information is used to instruct or configure at least one of the following (a) - (c).
(a) The secondary carrier or the secondary cell supports the terminal for residing in.
(b) The secondary carrier or the secondary cell supports the terminal for cell reselection.
(c) The secondary carrier or the secondary cell supports itself as a candidate cell.

For example, for instructions of the aforementioned (a) - (c), an enabling-or-not instruction (i.e., second information) can be broadcast or configured by a primary carrier or a primary cell, and the instruction is associated with a secondary carrier or a secondary cell. If it is an enabling instruction, it is determined by the terminal that the secondary carrier or the secondary cell is available for residing in and can be used as a candidate cell during cell reselection.

It should be noted that, in this embodiment, the second information can be an explicit instruction or an implicit instruction when implementing the aforementioned information instruction. For example, when the second information is an implicit instruction, the second information comprises the paging configuration information of the secondary carrier or the secondary cell, and/or the reference signal configuration information of the secondary carrier or the secondary cell. For example, when the second information comprises the paging configuration information of the secondary carrier or the secondary cell and/or the reference signal configuration information of the secondary carrier or the secondary cell, it can be determined by the terminal that the secondary carrier or the secondary cell is available for residing in and can be used as a candidate cell during cell reselection.

It is to be understood that, when the network device sends the second information, at least one of the following is met: the first information instructs on sending-priority information of a paging message on the secondary carrier or the secondary cell; the primary carrier or the primary cell meets cell residence conditions; the primary carrier or the primary cell meets the S criterion for cell reselection. Regarding the aforementioned content, please refer to relevant description in (41) - (43) above, this will not be repeated here.

(52) Stop monitoring downlink transmission (such as PDCCH, etc.) within the first time.

It is to be understood that, the first time mentioned in this embodiment can be considered as silence time or energy-saving time and the like of a network device. The first time can be determined according to the time information of the network device stopping receiving uplink transmission and/or the time information of the network device stopping sending downlink transmission, for example, the first time is the same as the time information of the network device stopping receiving uplink transmission and/or the time information of the network device stopping sending downlink transmission.

In one implementation, after receiving the first information, the first time can be considered by the terminal that as inactive time of discontinuous reception (DRX), and the terminal can stop monitoring downlink transmission during running time of a first timer. The starting time of the first timer is determined according to the network device stopping sending time information of downlink transmission, for example, the first timer is started at beginning moment when the network device stops sending downlink transmission. Running time (or duration) of the first timer is associated with the first time, for example, the running time of the first timer is the same as the first time.

In another implementation, when the downlink transmission is designated downlink transmission, at beginning moment of the first time, a second timer or response window corresponding to the designated downlink transmission is stopped, and at ending time of the first time, a second timer or response window corresponding to the designated downlink transmission is started. Optionally, when the designated downlink transmission is PDCCH corresponding to random access response (RAR), the second timer or response window comprises random access (RA)-response window (RA-ResponseWindow ) and/or RA-ContentionResolutionTimer; when the designated downlink transmission is PDCCH corresponding to preconfigured uplink resource (PUR), the second timer or response window comprises PUR-ResponseWindow and/or PUR-timer; when the designated downlink transmission is PDCCH corresponding to Message 3 (msg3), the second timer or response window comprises msgB-ResponseWindow.

For example, at beginning moment of the first time, ra-ResponseWindow, ra-ContentionResolutionTimer, msgB-ResponseWindow, and PUR-ResponseWindow timers are stopped by the terminal; and at ending time of the first time, ra-ResponseWindow, ra-ContentionResolutionTimer, msgB-ResponseWindow, and PUR- ResponseWindow timers are started by the terminal.

Further, in order to increase a probability of successful monitoring, when the monitoring time corresponding to the designated downlink transmission overlaps with the first time, the duration of the second timer or response window corresponding to the designated downlink transmission can be extended by the first time.

For example, assuming that the monitoring time corresponding to the designated downlink transmission overlaps with the first time, the second timer or response window is ra-ResponseWindow, ra-ContentionResolutionTimer, msgB-ResponseWindow, PUR-ResponseWindow, and the duration of ra-ResponseWindow, ra-ContentionResolutionTimer, msgB-ResponseWindow, PUR-ResponseWindow is T, the first time is N, then the extended duration of ra-ResponseWindow, ra-ContentionResolutionTimer, msgB-ResponseWindow, PUR-ResponseWindow is T+N.

(53) Stop measuring reference signals, such as SSB, CSI-RS, etc., within the first time.

(54) Stop the wireless-link monitoring of reference signals within the first time.

In one implementation, in order to reduce the probability of radio link failure, if one or more reference signals cannot be sent during an evaluation period of a radio link, the evaluation period of the radio link will be increased by periods of the one or more reference signals. In other words, if at least one reference signal is not sent during an evaluation period of the radio link, the number of evaluation periods of the radio link will be increased, or the evaluation period of the radio link will be extended by the first time.

For example, an evaluation period of a wireless link is T, the first time comprises M reference signals, and a period of a reference signal is N, then the extended evaluation period of the wireless link will be T+M*N.

For example, if one or more reference signals cannot be sent during an evaluation period of a radio link, the evaluation period of the radio link will be extended by the first time. For example, an evaluation period of a wireless link is T, the duration of the first time is N, then the extended evaluation period of the wireless link will be T+N.

(55) Stop performing beam-failure detection or link-recovery detection on a reference signal within the first time.

In one implementation, in order to reduce the probability of beam failure, if one or more reference signals cannot be sent during an evaluation period of beam-failure detection or link-recovery detection, the evaluation period will be increased by periods of the one or more reference signals. In other words, if at least one reference signal is not sent during an evaluation period of beam-failure detection or link-recovery detection, the number of evaluation periods of beam-failure detection or link-recovery detection will be increased, or the evaluation period of beam-failure detection or link-recovery detection will be extended by the first time.

For example, assuming that an evaluation period is T, the first time comprises M reference signals, and a period of a reference signal is N, then the extended evaluation period will be T+M*N.

For example, if one or more reference signals cannot be sent during an evaluation period, the evaluation period of the radio link will be extended by a duration of the first time. For example, if an evaluation period is T, a duration of the first time is N, then the extended evaluation period will be T+N.

(56) Stop sending uplink transmission, such as Physical Uplink Shared Channel (PUSCH), Physical Random Access Channel (PRACH), Sounding Reference Signal (SRS), Scheduling Request (SR), etc., within the first time.

In one implementation, during the running time of a third timer, sending uplink transmission, such as PUSCH, PRACH, SRS, SR, etc., is stopped. The starting time of the third timer is determined according to the time information of the network device stopping receiving uplink transmission, and the duration of the third timer is associated with the first time. In other words, the terminal can start a third timer at beginning moment of the first time, then the terminal stops sending uplink transmission during the running time of the third timer.

In another implementation, when the uplink transmission is designated uplink transmission (such as SR, etc.) and the running time of a fourth timer corresponding to the designated uplink transmission overlaps (or partially overlaps) with the first time, the running time of the fourth timer is extended by the first time; alternatively, the running time of the fourth timer is extended by a predetermined number of transmission periods, wherein the transmission period is a transmission period of the designated uplink transmission, and the predetermined number is determined according to sending moment of the designated uplink transmission that is comprised in the first time.

For example, assuming that the designated uplink transmission is SR, in order to ensure SR processing time of a base station, the first time will be extended by the sr-ProhibitTimer. If the sr-ProhibitTimer overlaps or partially overlaps with the first time during its running time, and there is one or more SR-sending moments in the first time, the running time of the sr-ProhibitTimer will be extended by periods of the one or more SR-sending moments. For example, if the running time of the sr-ProhibitTimer is T, the first time comprises M SR-sending moments, and the period of SR-sending moment is N, then the extended running time of the sr-ProhibitTimer will be T+M*N.

Alternatively, if the sr-ProhibitTimer overlaps or partially overlaps with the first time during running time, and there is one or more SR-sending moments in the first time, then the running time of the sr-ProhibitTimer will be extended by the duration of the first time. For example, if the running time of the sr-ProhibitTimer is T, the duration of the first time is N, then the extended evaluation period will be T+N.

(57) Convert or switch to a default bandwidth part (BWP) at beginning moment of the first time. In other words, when the terminal is in an activated BWP, the terminal can switch to the default BWP and stop bwp-InactivityTimer at beginning moment of the first time.

(58) When transmission time of uplink transmission overlaps (or partially overlaps) with the first time, the uplink transmission is retransmitted or is determined as failure.

For example, if a terminal sends an uplink signal (i.e., uplink transmission) such as PUSCH at a time which overlaps with the first time, the sending will be determined as failure and the PUSCH will be retransmitted by the terminal. For example, if the sending moment of the PUSCH overlaps with the first time, the terminal does not send the PUSCH, and determines that the sending of PUSCH fails and performs retransmission.

For another example, if a terminal sends an uplink signal such as PRACH at a time which overlaps with the first time, the terminal determines that the sending of preamble fails and performs retransmission, or determines that the Random Access Channel (RACH) process fails. For example, if the sending moment of PRACH overlaps with the first time, the terminal does not send the PRACH, determines that the sending of PRACH fails and performs sending of PRACH again, or determines that the PRACH process fails.

For another example, if a terminal sends an uplink signal such as PRACH at a time which overlaps with the first time, the terminal determines that the sending of the uplink signal fails and terminates this process. For example, if the sending moment of PRACH overlaps with the first time, the terminal does not send the PRACH, determines that the PRACH process fails, terminates the PRACH process, and reports it to an upper layer.

Further, when a network device is in a silence or power-saving state, for example, when the network device does not send or receive signals, as for a terminal, selecting a cell to which the network device belongs as a service cell will inevitably affect performance of the terminal. In order to avoid this problem, when a terminal determines that a target cell to which a network device belongs may be in a silence or power-saving state (that is, the target cell meets target conditions) based on the first information sent by the network device, then during cell reselection or cell residence, the terminal will lower the priority of the target cell that meets the target conditions, and /or postpone the service-initiation timing of the target cell or target cell access time.

The target conditions comprise at least one of the following (a) - (c).
(a) The network device corresponding to the target cell sends a paging message by a secondary carrier or a secondary cell.
(b) The network device corresponding to the target cell stops receiving uplink transmission.
(c) The network device corresponding to the target cell stops sending downlink transmission.

It should be noted that, as for the terminal lowers the priority of the target cell that meets the aforementioned target conditions during cell reselection as described above, it can be understood as follows: in a cell sorting within a frequency point where cells are located, the terminal will lower the priority of the target cell that meets the above conditions to the minimum; alternatively, in a cell sorting of all frequency points, the terminal will lower the priority of the target cell that meets the above target conditions to the minimum.

Based on this, as a possible implementation, the methods in which a terminal lowers the priority of the target cell that meets the target conditions can include the following manner 1 or manner 2.

Manner 1: lowering the priority of the target cell by calculating a cell-criterion R value. In one implementation, the terminal lowering the priority of a target cell by calculating a cell-criterion R value comprises: subtracting a predetermined offset value from a cell-criterion R value of the target cell so as to obtain a target R value, and the priority of the target cell is determined according to the target R value.

For example, in calculating a cell-criterion R value, for a cell that meets the above conditions, the R value of the cell is reduced by subtracting a positive offset value or added by a negative offset value. In calculating a cell-criterion R value, if a target cell meets the above target conditions, the cell-criterion R value can be subtracted by an offset value Qoffset_NES (positive value). For example, if a target cell (service cell) meets the above target conditions, Rs = Qmeas,s + Qhyst - Qoffsettemp - Qoffset_NES; if a target cell (neighboring cell) meets the above target conditions, Rn = Qmeas,n - Qoffset - Qoffsettemp - Qoffset_NES. It is to be understood that, the aforementioned Rs and Rn both represent a target R value, Qmeas,s and Qmeas,n both represent a reference signal received power (RSRP) value measured by a terminal when reselecting the target cell, Qoffset represents an offset value for adjusting the priority of a cell/frequency point, Qoffsettemp represents an offset value temporarily used to adjust the priority of a cell, and Qhyst represents the hysteresis value for cell reselection. Manner 2: lowering the priority of a target cell that meets the target conditions within the second time, wherein the second time is determined according to the time information of the network device stopping receiving uplink transmission and/or the time information of the network device stopping sending downlink transmission.

It is to be understood that, lowering the priority of a target cell that meets the target conditions within the second time can comprise: starting a fifth timer at beginning moment of the second time; lowering the priority of the target cell that meets the target conditions during running time of the fifth timer; and restoring the priority of the target cell when the fifth timer times out.

For example, the terminal can start a fifth timer at beginning moment of the first time, and a time duration of the fifth timer is the duration; during running time of the fifth timer, the priority of the target cell that meets the target conditions can be lowered in accordance with, but not limited to the manner of calculating a cell-criterion R value; and when the fifth timer times out, the priority of the target cell that meets the target conditions will be restored.

For the terminal receiving first information as mentioned above, in this embodiment, the terminal can receive the first information by an access stratum (AS), and notify a non-access stratum (NAS) of the first information by the access stratum, so that the terminal is aware of the silence or energy-saving state of the network device.

Further, if the terminal resides in a secondary carrier or a secondary cell, then the terminal considers the secondary carrier or the secondary cell as a service cell and needs to measure a reference signal of a primary carrier or a primary cell. Based on this, in this embodiment, in order to achieve the purpose of the terminal measuring a reference signal of a primary carrier or a primary cell on a secondary carrier or a secondary cell, the network device can send measurement configuration information by the secondary carrier or the secondary cell, and the measurement configuration information is used by the terminal to measure a reference signal sent by the primary carrier or the primary cell. Accordingly, after receiving the measurement configuration information on the secondary carrier or the secondary cell, the terminal can measure the reference signal sent by the primary carrier or the primary cell.

In one implementation, the measurement configuration information comprises at least one of the following (a)-(d).
(a) Frequency point information of a reference signal of a primary carrier or a primary cell.
(b) Time-domain configuration information of a reference signal of a primary carrier or a primary cell.
(c) Association of a primary carrier or a primary cell with a reference signal.
(d) a primary carrier or a primary cell has a same QCL relationship as a secondary carrier or a secondary cell.

It should be noted that, where the secondary cell or the secondary carrier has no reference signals, the sending-priority of the reference signal of the primary carrier or the primary cell is higher than the sending-priority of the paging message of the secondary carrier or the secondary cell and the priority of system information of the service cell. In other words, if the secondary carrier or the secondary cell has no reference signals, the terminal considers that the service cell will not send a paging message at a moment when a reference signal of a primary carrier or a primary cell is sent.

As shown in FIG. 4, which is a flow chart of a communication method 400 provided in an exemplary embodiment of the present application, the method 400 can, but is not limited to, be executed by a network device, and specifically can be executed by hardware and/or software installed in the network device. In this embodiment, the method 400 can at least comprise the following steps.

S410, first information is sent.

Wherein the first information is used to instruct or configure at least one of the following:
sending a paging message by a secondary carrier or a secondary cell;
a network device stopping receiving uplink transmission;
and the network device stopping sending downlink transmission.

It is to be understood that, for the implementation process of S410, reference can be made to relevant description in the method embodiments 200-300, as a possible implementation, the network device can also instruct or configure a secondary carrier or a secondary cell by a primary carrier or a primary cell. For example, in this embodiment, the network device can send fourth information before or after sending the first information, so as to instruct or configure a secondary carrier or a secondary cell. For example, the fourth information can be used to instruct or configure at least one of the following (61) - (64).

(61) Configuration information of the secondary carrier or the secondary cell.

(62) Configuration update information of the secondary carrier or the secondary cell.

It is to be understood that, in the case where the fourth information is used to instruct or configure the configuration update information of the secondary carrier or the secondary cell, the fourth information can be relevant information in a system-information-update process, such as paging message, paging-downlink paging instruction information (paging DCI), short message, etc. The instruction or configuration of the configuration update information of the secondary carrier or the secondary cell is illustrated below in combination with Manner 1 and Manner 2.

Manner 1: Instruct the configuration update information of the secondary cell or the secondary carrier by a system-information-update process corresponding to the secondary carrier or the secondary cell.

In the case where the configuration update information of the secondary cell or the secondary carrier is instructed by a system-information-update process corresponding to the secondary carrier or the secondary cell, the terminal resides in the secondary carrier or the secondary cell and considers the secondary carrier or the secondary cell as a service cell. Based on this, the configuration update information of the secondary carrier or the secondary cell is carried by at least one of a paging message, paging-downlink paging instruction information, and a short message in the system-information-update process.

In one implementation, the paging message or short message further carries at least one of the following (a) - (e).
(a) Target resource information, wherein the target resource information is the resource information used by a primary carrier or a primary cell to instruct or configure the configuration information of the secondary carrier or the secondary cell.
(b) An instruction for a primary carrier or a primary cell to send system information of a secondary carrier or a secondary cell. Wherein the primary carrier or the primary cell broadcasting or configuring the system information instruction is the system information of a service cell being broadcast or configured in the primary carrier or the primary cell.
(c) A frequency point of a primary carrier or a primary cell. It is to be understood that a frequency point of a primary carrier or a primary cell is the frequency point of the primary carrier or the primary cell that broadcasts or configures the system information.
(d) A time-domain resource of a primary carrier or a primary cell for sending the configuration of a secondary carrier or a secondary cell. Wherein the time-domain resource can comprise sending the system information (SI) scheduling window or beginning time, period, and duration, etc., of the PDCCH that is configured by the secondary carrier or the secondary cell on the primary carrier or the primary cell.
(e) A frequency-domain resource of a primary carrier or a primary cell for sending the configuration of a secondary carrier or a secondary cell. Wherein the frequency-domain resource can comprise sending beginning position and bandwidth of the PDCCH that is configured by the secondary carrier or the secondary cell on the primary carrier or the primary cell.

Manner 2: Instruct the configuration update information of a secondary cell or a secondary carrier by a system-information-update process corresponding to a primary carrier or a primary cell. In the case where the configuration update information of a secondary cell or a secondary carrier is instructed by a system-information-update process corresponding to a primary carrier or a primary cell, the configuration update information of the secondary carrier or the secondary cell is carried by at least one of paging message, paging-downlink paging instruction information, and short message in the system-information-update process.

In one implementation, at least one of the paging message, the paging-downlink paging instruction information, and the short message further carries the configuration information of physical downlink control channel (PDCCH), such as the beginning moment, period, duration, etc., of PDCCH.

In addition, the paging message or the short message further carries at least one of the following (a) - (c).
(a) An instruction for updating the system information of a secondary carrier or a secondary cell.
(b) Time-domain resource for sending the configuration of a secondary carrier or a secondary cell.
(c) Frequency-domain resource for sending the configuration of a secondary carrier or a secondary cell.

(63) Enable or disable the secondary carrier or the secondary cell.

For example, the fourth information is an enable-or-disable instruction of a secondary carrier or a secondary cell that is broadcast or configured via a primary carrier or a primary cell by a network device, which is used to instruct whether the state of the secondary carrier or the secondary cell is enabled or disabled, or to instruct an enable-or-disable instruction of a reference signal on the secondary carrier or the secondary cell, or to instruct an enable-or-disable instruction of system information on the secondary carrier or the secondary cell, or to instruct an enable-or-disable instruction of a paging message on the secondary carrier or the secondary cell. In other words, in this embodiment, enabling or disabling a secondary carrier or a secondary cell can comprise at least one of: enabling or disabling the secondary carrier or the secondary cell, enabling or disabling a reference signal of the secondary carrier or secondary cell, enabling or disabling the system information of the secondary carrier or secondary cell, and enabling or disabling a paging message of the secondary carrier or the secondary cell.

(64) Time information when the secondary carrier or the secondary cell is enabled or disabled. Wherein the time information can be the beginning time, duration, ending time, etc., of enabling or disabling the secondary carrier or the secondary cell.

As for the aforementioned sending the fourth information, a network-side device can broadcast or configure a secondary carrier or a secondary cell as a neighboring cell by a primary carrier or a primary cell, and instruct that the neighboring cell is a secondary carrier or a secondary cell; or it can broadcast or configure a secondary carrier or a secondary cell as a secondary carrier or a secondary cell by a primary carrier or a primary cell.

For example, a secondary carrier or a secondary cell is broadcast or configured as a neighboring cell by a primary carrier or a primary cell, and the neighboring cell is instructed as a secondary carrier or a secondary cell. For example, a primary carrier or a primary cell broadcasts or configures the configuration of a neighboring cell in the system information, for example, SIB3, SIB4, SIB5 or a newly introduced SIB (System Information Block), the configuration of a neighboring cell comprises the configuration of a secondary carrier or a secondary cell, and the configuration of a secondary carrier or a secondary cell comprises a frequency point of the secondary carrier or the secondary cell, an instruction of the secondary carrier or the secondary cell, the configuration of the secondary carrier or the secondary cell, whether to send or not to send SSB, whether to send or not to send a paging message, whether to send or not to send the system information, etc. In addition, the aforementioned configuration can further comprise access configuration, wireless resource configuration, cell reselection information, etc.

For another example, a primary carrier or a primary cell broadcasts or configures a secondary carrier or a secondary cell as a secondary carrier or a secondary cell. For example, a primary carrier or a primary cell broadcasts or configures the configuration of a secondary carrier or a secondary cell in the system information, and the configuration of the secondary carrier or the secondary cell comprises a frequency point of the secondary carrier or the secondary cell, an instruction of the secondary carrier or the secondary cell, the configuration of the secondary carrier or the secondary cell, whether to send or not to send SSB, whether to send or not to send a paging message, whether to send the system information, etc. Wherein the secondary carrier or the secondary cell is independent system information that can also be independently mapped to an SI, which is not limited here.

Correspondingly, after receiving the fourth information, the terminal side can perform at least one of the following (a) - (d) according to its own needs.
(a) Associate the primary carrier or the primary cell that is used to send the fourth information with the secondary carrier or the secondary cell.
(b) Read the configuration information of the secondary carrier or the secondary cell.
(c) Save the configuration information of the secondary carrier or the secondary cell.
(d) Update the saved configuration information of the secondary carrier or the secondary cell.

Further, when in an idle or inactive state, the terminal receives configuration of the secondary carrier on the primary carrier or the primary cell, and when certain conditions are met (such as the terminal needs to send data on the secondary carrier, or the terminal needs to send a large amount of data, etc.), the terminal can send a Wake up signal (WUS) on the secondary carrier or the secondary cell, so as to request the secondary carrier or the secondary cell to send an SSB or a paging message. After receiving the WUS, the network device sends an SSB and/or a paging message. To achieve this purpose, as a possible implementation, the network device can send third information, and the third information is used to instruct or configure the terminal to send a WUS on the secondary carrier or the secondary cell. Correspondingly, after receiving the third information, the terminal can send a WUS to the network device on the secondary carrier or the secondary cell, and after receiving the WUS, the network device sends a synchronization signal SSB or a paging message on the secondary carrier or the secondary cell.

In one implementation, the third information comprises at least one of the following (71) - (73).

(71) Sending moment of the WUS. For example, the sending moment of the WUS can comprise beginning moment, period, etc. It should be noted that, the sending moment of the WUS takes time of a primary carrier or a primary cell as a reference time. For example, a system frame number (SFN), a subframe, and a time slot of a primary carrier or a primary cell are consistent with those of a secondary carrier or a secondary cell. Then, if a terminal obtains time synchronization of a primary carrier or a primary cell, it can also be considered as obtaining synchronization of a secondary carrier or a secondary cell, and the sending moment of the WUS is calculated according to the delay configuration of the WUS.

(72) Offset value of the WUS.

In combination with the aforementioned sending moment of the WUS, in this embodiment, it can be considered that the sending moment of the WUS can be determined according to the offset value of the time when a primary carrier or a primary cell sends a reference signal. For example, the sending moment of a reference signal of a primary carrier or a primary cell is N, the offset value of the WUS is M, then the sending moment of the WUS is N+W.

(73) The sending time window of the WUS. Wherein the sending time window of the WUS can comprise a plurality of sending moments, each sending moment has a QCL relationship with a reference signal of a primary carrier or a primary cell, or has a binding relationship with a beam sent by a primary carrier or a primary cell. For example, if there is a n-th beam of a primary carrier or a primary cell, then within the sending time window of the WUS, the sending moment of the WUS corresponding to the beam is a n-th sending moment.

It should be noted that, the terminal, when sending the WUS, meets the condition that the secondary carrier or a secondary cell is in a disabled state.

As shown in FIG. 5, which is a flow chart of a communication method 500 provided in an exemplary embodiment of the present application, the method 500 can, but is not limited to, be executed by a terminal, and specifically can be executed by hardware and/or software installed in the terminal. In this embodiment, the method 500 can at least comprise the following steps.

S510, first information is received.

Wherein the first information is used to instruct or configure at least one of the following: sending a paging message by a secondary carrier or a secondary cell; a network device stopping receiving uplink transmission; and the network device stopping sending downlink transmission.

In one implementation, the first information comprises at least one of the following: first instruction information for instructing the secondary carrier or the secondary cell to send a paging message; second instruction information for instructing the terminal to monitor the paging message on the secondary carrier or the secondary cell; the paging resource configuration information corresponding to the secondary carrier or the secondary cell; time information of the paging message monitored by the terminal on the secondary carrier or the secondary cell; the configuration information of a secondary carrier or a secondary cell that has the same spatial characteristics as those of the primary carrier or the primary cell; time information of the network device stopping receiving uplink transmission; and time information of the network device stopping sending downlink transmission.

In one implementation, the time information of the paging message monitored by the terminal on the secondary carrier or the secondary cell comprises at least one of beginning time, ending time, duration and period of the paging message monitored by the terminal on the secondary carrier or the secondary cell; the time information of the network device stopping receiving uplink transmission comprises at least one of beginning time, ending time, duration and period of the network device stopping receiving uplink transmission; the time information of the network device stopping sending downlink transmission comprises at least one of beginning time, ending time, duration and period of the network device stopping sending downlink transmission.

In one implementation, after receiving first information, the method further comprises performing at least one of the following according to the first information: when in an idle state or an inactive state, residing in or reselecting to the secondary carrier or the secondary cell, and monitoring a paging message on the secondary carrier or the secondary cell; stopping monitoring downlink transmission within the first time; stopping measuring a reference signal within the first time; stopping wireless-link monitoring of a reference signal within the first time; stopping beam-failure detection or link-recovery detection of a reference signal within the first time; stopping sending uplink transmission within the first time; switching to a default bandwidth part (BWP) at beginning moment of the first time; when the transmission time of the uplink transmission overlaps with the first time, the uplink transmission is retransmitted or determined as failure; wherein the first time is determined based on the network device stops receiving time information of uplink transmission and/or stops sending time information of downlink transmission.

In one implementation, stopping monitoring downlink transmission within the first time comprises: stopping monitoring downlink transmission within the running time of a first timer; wherein the starting time of the first timer is determined according to the time information of the network device stopping sending downlink transmission, and the running time of the first timer is associated with the first time.

In one implementation, stopping monitoring downlink transmission within the first time comprises: where the downlink transmission is designated downlink transmission, a second timer or response window corresponding to the designated downlink transmission is stopped at the beginning moment of the first time, and a second timer or response window corresponding to the designated downlink transmission is started at the ending moment of the first time.

In one implementation, where the monitoring time corresponding to the designated downlink transmission overlaps with the first time, the duration of the second timer or response window corresponding to the designated downlink transmission is extended by the first time.

In one implementation, where the designated downlink transmission is the PDCCH corresponding to RAR, the second timer or response window comprises ra-response window and/or ra-ContentionResolutionTimer; where the designated downlink transmission is the PDCCH corresponding to PUR, the second timer or response window comprises PUR-response window and/or PUR-timer; where the designated downlink transmission is the PDCCH corresponding to message 3, the second timer or response window comprises msgB-response window.

In one implementation, stopping wireless link monitoring of a reference signal within the first time comprises: there is at least one reference signal that is not sent within an evaluation period of the wireless link, the number of evaluation periods of the wireless link is increased, or the evaluation period of the wireless link is extended by the first time.

In one implementation, stopping beam-failure detection or link-recovery detection of a reference signal within the first time comprises: there is at least one reference signal that is not sent within an evaluation period of beam-failure detection or link-recovery detection, the number of evaluation periods of beam-failure detection or link-recovery detection is increased, or the evaluation period of beam-failure detection or link-recovery detection is extended by the first time.

**In** one implementation, stopping sending uplink transmission within the first time comprises: stopping sending the uplink transmission within running time of a third timer; wherein the starting time of the third timer is determined according to the time information of the network device stopping receiving uplink transmission, and the duration of the third timer is associated with the first time.

**In** one implementation, stopping sending uplink transmission within the first time comprises: where the uplink transmission is designated uplink transmission and the running time of a fourth timer corresponding to the designated uplink transmission overlaps with the first time, the running time of the fourth timer is extended by the first time, or the running time of the fourth timer is extended by a predetermined number of transmission periods, wherein the transmission period is the transmission period of the designated uplink transmission, and the predetermined number is determined according to the sending moment of the designated uplink transmission that is comprised in the first time.

**In** one implementation, the method further comprises: receiving second information; wherein the second information is used to instruct or configure at least one of the following: the secondary carrier or the secondary cell supports the terminal for residing in; the secondary carrier or the secondary cell supports the terminal for reselection; and the secondary carrier or the secondary cell supports itself as a candidate cell.

**In** one implementation, the second information comprises at least one of the following: the paging configuration information of the secondary carrier or the secondary cell; and the reference signal configuration information of the secondary carrier or the secondary cell.

**In** one implementation, residing in or reselecting to the secondary carrier or the secondary cell comprises at least one of the following: residing in or reselecting to the secondary carrier or the secondary cell according to the second information; and residing in or reselecting to the secondary carrier or the secondary cell according to a terminal identifier.

**In** one implementation, any one of the following conditions is met: the sending-priority information of a paging message on the secondary carrier or the secondary cell; a primary carrier or a primary cell meets cell residence conditions; and a primary carrier or a primary cell meets the S criterion for cell reselection.

In one implementation, sending-priority of a paging message on the secondary carrier or the secondary cell comprises at least one of the following: the priority of a reference signal of a primary carrier or a primary cell is higher than the priority of a paging message of a secondary carrier or a secondary cell; and the priority of the system information of a primary carrier or a primary cell is lower than the priority of a paging message of a secondary carrier or a secondary cell.

In one implementation, the method further comprises: receiving the measurement configuration information sent by the secondary carrier or the secondary cell; and measuring a reference signal sent by a primary carrier or a primary cell according to the measurement configuration information.

In one implementation, the measurement configuration information comprises at least one of the following: the frequency point information of a reference signal of a primary carrier or a primary cell; the time-domain configuration information of a reference signal of a primary carrier or a primary cell; the association information of a primary carrier or a primary cell with a reference signal; and a primary carrier or a primary cell has a same quasi co-location (QCL) relationship as a secondary carrier or a secondary cell.

In one implementation, where the secondary cell or the secondary carrier has no reference signals, the sending-priority of a reference signal of the primary carrier or the primary cell is higher than the sending-priority of a paging message of the secondary carrier or the secondary cell.

In one implementation, the method further comprises: performing at least one of the following when the target conditions are met: during cell reselection, lowering the priority of a target cell that meets target conditions; postponing the service-initiation timing on a target cell or target cell access timing; wherein the target conditions comprise at least one of the following: the network device corresponding to the target cell sends a paging message by a secondary carrier or a secondary cell; the network device corresponding to the target cell stops receiving uplink transmission; and the network device corresponding to the target cell stops sending downlink transmission.

In one implementation, lowering the priority of a target cell that meets target conditions comprises one of the following: lowering the priority of a target cell by calculating a cell-criterion R value; lowering the priority of a target cell that meets the target conditions within second time, wherein the second time is determined according to the time information of the network device stopping receiving uplink transmission and/or the time information of the network device stopping sending downlink transmission.

In one implementation, lowering the priority of a target cell by calculating a cell-criterion R value comprises: subtracting a predetermined offset value from the cell-criterion R value of a target cell so as to obtain a target R value; and determining the priority of the target cell according to the target R value.

In one implementation, lowering the priority of a target cell that meets the target conditions within second time comprises: starting a fifth timer at beginning moment of the second time; during the running time of the fifth timer, lowering the priority of a target cell that meets the target conditions; when the fifth timer times out, restoring the priority of the target cell.

In one implementation, the method further comprises: receiving third information; wherein the third information is used to instruct or configure the terminal to send a wake-up signal WUS on the secondary carrier or the secondary cell.

In one implementation, the third information comprises at least one of the following: the sending moment of the WUS; the offset value of the WUS; and the sending time window of the WUS.

In one implementation, the method further comprises: sending a WUS by the secondary carrier or the secondary cell, wherein the WUS is used to request the network device to send a synchronization signal (SSB) or a paging message on the secondary carrier or the secondary cell.

In one implementation, receiving first information comprises: receiving the first information by an access stratum, and notifying a non-access stratum of the first information by the access stratum.

In one implementation, prior to receiving first information, the method further comprises: receiving fourth information; wherein the fourth information is used to instruct or configure at least one of the following: the configuration information of the secondary carrier or the secondary cell; the configuration update information of the secondary carrier or the secondary cell; enabling or disabling the secondary carrier or secondary cell; and the time information of enabling or disabling of the secondary carrier or the secondary cell.

In one implementation, enabling or disabling the secondary carrier or the secondary cell comprises: enabling or disabling the state of the secondary carrier or the secondary cell; enabling or disabling a reference signal of the secondary carrier or the secondary cell; enabling or disabling the system information of the secondary carrier or secondary cell; and enabling or disabling a paging message of the secondary carrier or the secondary cell.

In one implementation, after receiving the fourth information, the method further comprises at least one of the following: associating the primary carrier or the primary cell that is used to send the fourth information with the secondary carrier or the secondary cell; reading the configuration information of the secondary carrier or the secondary cell; saving the configuration information of the secondary carrier or the secondary cell; and updating the saved configuration information of the secondary carrier or the secondary cell.

In one implementation, the method further comprises any one of the following: receiving the configuration update information of a secondary cell or a secondary carrier instructed by a system-information-update process corresponding to the secondary carrier or the secondary cell; and receiving the configuration update information of a secondary cell or a secondary carrier instructed by a system-information-update process corresponding to a primary carrier or a primary cell.

In one implementation, when receiving the configuration update information of a secondary cell or a secondary carrier instructed by a system-information-update process corresponding to the secondary carrier or the secondary cell, the configuration update information of the secondary carrier or the secondary cell is carried by at least one of paging message, paging-downlink paging instruction information, and short message in the system-information-update process.

In one implementation, the paging message or short message further carries at least one of the following: target resource information, wherein the target resource information is resource information used by a primary carrier or a primary cell to instruct or configure configuration information of the secondary carrier or the secondary cell; an instruction of a primary carrier or a primary cell for instructing or configuring system information; a frequency point of a primary carrier or a primary cell; the time-domain resource for the configuration of a secondary carrier or a secondary cell; and the frequency-domain resource for the configuration of a secondary carrier or a secondary cell.

In one implementation, when receiving the configuration update information of a secondary cell or a secondary carrier instructed by a system-information-update process corresponding to a primary carrier or a primary cell, the configuration update information of the secondary carrier or the secondary cell is carried by at least one of paging message, paging-downlink paging instruction information, and short message in the system-information-update process.

In one implementation, at least one of the paging message and the paging-downlink paging instruction information short message further carries the configuration information of physical downlink control information.

In one implementation, the paging message or the short message further carries at least one of the following: an instruction for updating system information of a secondary carrier or a secondary cell; the time-domain resource for sending the configuration of a secondary carrier or a secondary cell; or the frequency-domain resource for sending the configuration of a secondary carrier or a secondary cell.

It should be noted that the various implementations mentioned in the present method embodiment have the same or corresponding technical features as the aforementioned method embodiments 200-400. Therefore, as for the implementation process of the various implementations mentioned in the present method embodiment, reference can be made to the relevant description in the aforementioned method embodiments 200-400, and the same or corresponding technical effects can be achieved, and this will not be repeated here.

The communication methods 200-500 provided in embodiments of the present application can be executed by a communication apparatus. In embodiments of the present application, the communication apparatus provided in embodiments of the present application is illustrated by taking the communication apparatus executing the communication methods 200-500 as an example.

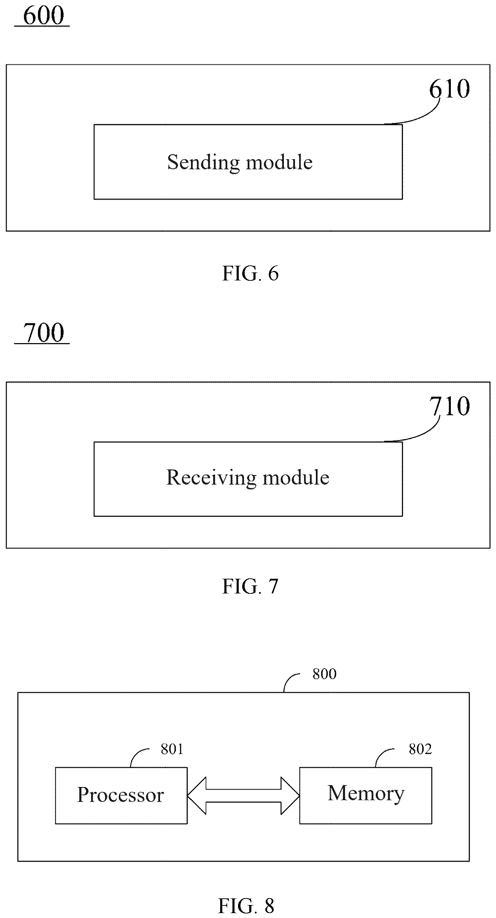

As shown in FIG. 6, which is schematic structural diagram of a communication apparatus 600 provided in an exemplary embodiment of the present application, the apparatus 600 comprises: a sending module 610 for sending first information; wherein the first information is used to instruct or configure at least one of the following: sending a paging message by a secondary carrier or a secondary cell; a network device stopping receiving uplink transmission; and a network device stopping sending downlink transmission.

In one implementation, the apparatus 600 can further comprise an execution module, which is used to execute at least one of the following: sending a paging message by a secondary carrier or a secondary cell; a network device stopping receiving uplink transmission; and a network device stopping sending downlink transmission.

In one implementation, the first information comprises at least one of the following: first instruction information for instructing the secondary carrier or the secondary cell to send a paging message; second instruction information for instructing a terminal to monitor a paging message on the secondary carrier or the secondary cell; the paging resource configuration information corresponding to the secondary carrier or the secondary cell; time information of a paging message monitored by a terminal on the secondary carrier or the secondary cell; the configuration information of a secondary carrier or a secondary cell that has the same spatial characteristics as those of the primary carrier or the primary cell; time information of the network device stopping receiving uplink transmission; and time information of the network device stopping sending downlink transmission.

In one implementation, the time information of a paging message monitored by the terminal on the secondary carrier or the secondary cell comprises at least one of beginning time, ending time, duration and period of a paging message monitored by the terminal on the secondary carrier or the secondary cell; the time information of the network device stopping receiving uplink transmission comprises at least one of beginning time, ending time, duration and period of the network device stopping receiving uplink transmission; the time information of the network device stopping sending downlink transmission comprises at least one of beginning time, ending time, duration and period of the network device stopping sending downlink transmission.

In one implementation, the sending module 610 is further used to: sending second information; wherein the second information is used to instruct or configure at least one of the following: the secondary carrier or the secondary cell supports the terminal for residing in; the secondary carrier or the secondary cell supports terminal for cell reselection; the secondary carrier or the secondary cell supports itself as a candidate cell.

In one implementation, the second information comprises at least one of the following: the paging configuration information of the secondary carrier or the secondary cell; and the reference signal configuration information of the secondary carrier or the secondary cell.

In one implementation, any one of the following conditions is met: the first information instructs the sending-priority information of a paging message on the secondary carrier or the secondary cell; the primary carrier or the primary cell meets the cell residence conditions; the primary carrier or the primary cell meets the S criterion for cell reselection.

In one implementation, a sending-priority of a paging message on the secondary carrier or the secondary cell comprises any one of the following: the priority of a reference signal of a primary carrier or a primary cell is higher than the priority of a paging message of a secondary carrier or a secondary cell; and the priority of the system information of a primary carrier or a primary cell is lower than the priority of a paging message of a secondary carrier or a secondary cell.

In one implementation, the sending module 610 is further used to send measurement configuration information by the secondary carrier or the secondary cell, wherein the measurement configuration information is used by the terminal to measure a reference signal sent by a primary carrier or a primary cell.

In one implementation, the measurement configuration information comprises at least one of the following: the frequency point information of a reference signal of a primary carrier or a primary cell; the time-domain configuration information of a reference signal of a primary carrier or a primary cell; the association of a primary carrier or a primary cell with a reference signal; and a primary carrier or a primary cell has a same quasi co-location (QCL) relationship as a secondary carrier or a secondary cell.

In one implementation, where the secondary cell or the secondary carrier has no reference signals, the sending-priority of a reference signal of the primary carrier or the primary cell is higher than the sending-priority of a paging message of the secondary carrier or the secondary cell.

In one implementation, the sending module 610 is further used to send third information; wherein the third information is used to instruct or configure a terminal to send a wake-up signal (WUS) in a secondary carrier or a secondary cell.

In one implementation, the third information comprises at least one of the following: the sending moment of the WUS; the offset value of the WUS; and the sending time window of the WUS.

In one implementation, the apparatus 600 further comprises a receiving module for receiving a WUS sent by a terminal on the secondary carrier or the secondary cell; the sending module 610 is further used to send a synchronization signal SSB or a paging message on the secondary carrier or the secondary cell.

In one implementation, the sending module 610 is further used to send fourth information; wherein the fourth information is used to instruct or configure at least one of the following: the configuration information of the secondary carrier or the secondary cell; the configuration update information of the secondary carrier or the secondary cell; enabling or disabling the secondary carrier or secondary cell; and the time information of enabling or disabling the secondary carrier or the secondary cell.

In one implementation, the sending module 610 sending fourth information comprises at least one of the following: taking the secondary cell or the secondary carrier as a neighboring cell, and sending the fourth information.

In one implementation, enabling or disabling of the secondary carrier or the secondary cell comprises: enabling or disabling the secondary carrier or the secondary cell; enabling or disabling a reference signal of the secondary carrier or the secondary cell; enabling or disabling the system information of the secondary carrier or secondary cell; and enabling or disabling a paging message of the secondary carrier or the secondary cell.

In one implementation, the sending module 610 is used for any one of the following: instructing the configuration update information of a secondary cell or a secondary carrier by a system-information-update process corresponding to the secondary carrier or the secondary cell; and instructing the configuration update information of a secondary cell or a secondary carrier by a system-information-update process corresponding to a primary carrier or a primary cell.

In one implementation, when instructing configuration update information of a secondary cell or a secondary carrier by a system-information-update process corresponding to the secondary carrier or the secondary cell, the configuration update information of the secondary carrier or the secondary cell is carried by at least one of paging message, paging-downlink paging instruction information, and short message in the system-information-update process.

In one implementation, the paging message or the short message further carries at least one of the following: target resource information, wherein the target resource information is the resource information used by a primary carrier or a primary cell to instruct or configure configuration information of the secondary carrier or the secondary cell; an instruction of a primary carrier or a primary cell for sending the system information of a secondary carrier or a secondary cell; a frequency point of a primary carrier or a primary cell; the time-domain resource of a primary carrier or a primary cell for sending the configuration of a secondary carrier or a secondary cell; and the frequency-domain resource of a primary carrier or a primary cell for sending the configuration of a secondary carrier or a secondary cell.

In one implementation, when instructing the configuration update information of a secondary cell or a secondary carrier by a system-information-update process corresponding to a primary carrier or a primary cell, the configuration update information of the secondary carrier or the secondary cell is carried by at least one of paging message, paging-downlink paging instruction information, and short message in the system-information-update process.

In one implementation, at least one of the paging message, the paging-downlink paging instruction information, and the short message further carries the configuration information of physical downlink control information.

In one implementation, the paging message or the short message further carries at least one of the following: an instruction for updating the system information of a secondary carrier or a secondary cell; the time-domain resource for sending the configuration of a secondary carrier or a secondary cell; and the frequency-domain resource for sending the configuration of a secondary carrier or a secondary cell.

The communication apparatus in embodiments of the present application can be a network device, and the network device can comprise, but is not limited to the type of terminal 12 listed above, which is not specifically limited in embodiments of the present application.

The communication apparatus 600 provided in embodiments of the present application can implement various processes implemented by method embodiments of FIG. 2 to FIG. 4, and achieve the same technical effect, this will not be repeated here.

As shown in FIG. 7, which is a schematic structural diagram of a communication apparatus 700 provided in an exemplary embodiment of the present application, the apparatus 700 comprises: a receive module 710 for receive first information, wherein the first information is used to instruct or configure at least one of the following: sending a paging message by a secondary carrier or a secondary cell; a network device stopping receiving uplink transmission; and a network device stopping sending downlink transmission.

In one implementation, the apparatus 700 further comprise an execution module for performing at least one of the following: monitoring a paging message on a secondary carrier or a secondary cell; stopping sending uplink transmission; and stopping receiving downlink transmission.

In one implementation, the first information comprises at least one of the following: first instruction information for instructing the secondary carrier or the secondary cell to send a paging message; second instruction information for instructing a terminal to monitor a paging message on the secondary carrier or the secondary cell; the paging resource configuration information corresponding to the secondary carrier or the secondary cell; time information of a paging message monitored by a terminal on the secondary carrier or the secondary cell; the configuration information of a secondary carrier or a secondary cell that has the same spatial characteristics as those of the primary carrier or the primary cell; time information of the network device stopping receiving uplink transmission; and time information of the network device stopping sending downlink transmission.

In one implementation, the time information of a paging message monitored by the terminal on the secondary carrier or the secondary cell comprises at least one of beginning time, ending time, duration and period of a paging message monitored by the terminal on the secondary carrier or the secondary cell; the time information of the network device stopping receiving uplink transmission comprises at least one of beginning time, ending time, duration and period of the network device stopping receiving uplink transmission; the time information of the network device stopping sending downlink transmission comprises at least one of beginning time, ending time, duration and period of the network device stopping sending downlink transmission.

In one implementation, the apparatus further comprises an execution module for performing at least one of the following according to the first information: when in an idle state or an inactive state, residing in or reselecting to the secondary carrier or the secondary cell, and monitoring a paging message on the secondary carrier or the secondary cell; stopping monitoring downlink transmission within the first time; stopping measuring a reference signal within the first time; stopping wireless-link monitoring of a reference signal within the first time; stopping beam-failure detection or link-recovery detection of a reference signal within the first time; stopping sending uplink transmission within the first time; switching to a default bandwidth part (BWP) at beginning moment of the first time; when the transmission time of uplink transmission overlaps with the first time, the uplink transmission is retransmitted or determined as failure; wherein the first time is determined according to the time information of the network device stopping receiving uplink transmission and/or the time information of the network device stopping sending downlink transmission.

In one implementation, the execution module stopping monitoring downlink transmission within the first time comprises: stopping monitoring downlink transmission within the running time of a first timer; wherein the starting time of the first timer is determined according to the time information of the network device stopping sending downlink transmission, and the running time of the first timer is associated with the first time.

In one implementation, the execution module stopping monitoring downlink transmission within the first time comprises: where the downlink transmission is designated downlink transmission, a second timer or response window corresponding to the designated downlink transmission is stopped at beginning moment of the first time, and a second timer or response window corresponding to the designated downlink transmission is started at ending moment of the first time.

In one implementation, where the monitoring time corresponding to the designated downlink transmission overlaps with the first time, the duration of a second timer or response window corresponding to the designated downlink transmission is extended by the execution module by the first time.

In one implementation, where the designated downlink transmission is the PDCCH corresponding to RAR, the second timer or response window comprises ra-response window and/or ra-ContentionResolutionTimer; where the designated downlink transmission is the PDCCH corresponding to PUR, the second timer or response window comprises PUR-response window and/or PUR-timer; where the designated downlink transmission is the PDCCH corresponding to message 3, the second timer or response window comprises msgB-response window.

In one implementation, the execution module stopping wireless-link monitoring of a reference signal within the first time comprises: there is at least one reference signal that is not sent within an evaluation period of the wireless link, the number of evaluation periods of the wireless link is increased, or the evaluation period of the wireless link is extended by the first time.

In one implementation, the execution module stopping beam-failure detection or link-recovery detection of a reference signal within the first time comprises: there is at least one reference signal that is not sent within an evaluation period of the beam-failure detection or link-recovery detection, the number of evaluation periods of beam-failure detection or link-recovery detection is increased, or the evaluation period of beam-failure detection or link-recovery detection is extended by the first time.

In one implementation, the execution module stopping sending uplink transmission within first time comprises: stopping sending uplink transmission within the running time of a third timer; wherein the starting time of the third timer is determined according to the time information of the network device stopping receiving uplink transmission, and the running time of the third timer is associated with the first time.

In one implementation, the execution module stopping sending uplink transmission within first time comprises: where the uplink transmission is designated uplink transmission and running time of a fourth timer corresponding to the designated uplink transmission overlaps with the first time, the running time of the fourth timer is extended by the first time, or the running time of the fourth timer is extended by a predetermined number of transmission periods, wherein the transmission period is the transmission period of the designated uplink transmission, and the predetermined number is determined according to the sending moment of the designated uplink transmission that is comprised in the first time.

In one implementation, the receiving module 710 is further used to receive second information; wherein the second information is used to instruct or configure at least one of the following: the secondary carrier or the secondary cell supports the terminal for residing in; the secondary carrier or the secondary cell supports the terminal for reselection; the secondary carrier or the secondary cell supports itself as a candidate cell.

In one implementation, the second information comprises at least one of the following: the paging configuration information of the secondary carrier or the secondary cell; and the reference signal configuration information of the secondary carrier or the secondary cell.

In one implementation, residing in or reselecting to the secondary carrier or the secondary cell comprises at least one of the following: residing in or reselecting to the secondary carrier or the secondary cell according to the second information; and residing in or reselecting to the secondary carrier or the secondary cell according to a terminal identifier.

In one implementation, any one of the following conditions is met: sending-priority information of a paging message on the secondary carrier or the secondary cell; a primary carrier or a primary cell meets the cell residence conditions; and a primary carrier or a primary cell meets the S criterion for cell reselection.

In one implementation, the sending-priority of a paging message on the secondary carrier or the secondary cell comprises at least one of the following: the priority of a reference signal of a primary carrier or a primary cell is higher than the priority of a paging message of a secondary carrier or a secondary cell; and the priority of system information of a primary carrier or a primary cell is lower than the priority of a paging message of a secondary carrier or a secondary cell.

In one implementation, the receiving module 710 is further used to receive the measurement configuration information sent by the secondary carrier or the secondary cell; the apparatus further comprises a measurement module for measuring a reference signal sent by a primary carrier or a primary cell according to the measurement configuration information.

In one implementation, the measurement configuration information comprises at least one of the following: the frequency point information of a reference signal of a primary carrier or a primary cell; the time-domain configuration information of a reference signal of a primary carrier or a primary cell; the association information of a primary carrier or a primary cell with a reference signal; and a primary carrier or a primary cell has a same quasi co-location (QCL) relationship as a secondary carrier or a secondary cell.

In one implementation, where the secondary cell or the secondary carrier has no reference signals, the sending-priority of a reference signal of the primary carrier or the primary cell is higher than the sending-priority of a paging message of the secondary carrier or the secondary cell.

In one implementation, the execution module is further used to perform at least one of the following when target conditions are met: during cell reselection, lowering the priority of a target cell that meets target conditions; postponing the service-initiation timing on a target cell or target cell access timing; wherein the target conditions comprise at least one of the following: the network device corresponding to the target cell sends a paging message by a secondary carrier or a secondary cell; the network device corresponding to the target cell stops receiving uplink transmission; and the network device corresponding to the target cell stops sending downlink transmission.

In one implementation, lowering the priority of a target cell that meets target conditions comprises at least one of the following: lowering the priority of a target cell by calculating a cell-criterion R value; lowering the priority of a target cell that meets the target conditions within second time, wherein the second time is determined according to the time information of the network device stopping receiving uplink transmission and/or the time information of the network device stopping sending downlink transmission.

In one implementation, lowering the priority of a target cell by calculating a cell-criterion R value comprises: subtracting a predetermined offset value from the cell-criterion R value of the target cell so as to obtain a target R value; and determining the priority of the target cell according to the target R value.

In one implementation, lowering the priority of a target cell that meets the target conditions within second time comprises: starting a fifth timer at beginning moment of the second time; during the running time of the fifth timer, lowering the priority of a target cell that meets the target conditions; and when the fifth timer times out, restoring the priority of the target cell.

In one implementation, the receiving module 710 is further used to receive third information; wherein the third information is used to instruct or configure the terminal to send a wake-up signal (WUS) on the secondary carrier or the secondary cell.

In one implementation, the third information comprises at least one of the following: the sending moment of the WUS; the offset value of the WUS; and the sending time window of the WUS.

In one implementation, the method further comprises: sending a WUS by the secondary carrier or the secondary cell, wherein the WUS is used to request the network device to send a synchronization signal SSB or a paging message on the secondary carrier or the secondary cell.

In one implementation, the receiving module 710 receiving first information comprises: receiving the first information by an access stratum, and notifying a non-access stratum of the first information by the access stratum.

In one implementation, prior to receiving the first information, the receiving module 710 is further used to receive fourth information; wherein the fourth information is used to instruct or configure at least one of the following: the configuration information of the secondary carrier or the secondary cell; the configuration update information of the secondary carrier or the secondary cell; enabling or disabling the secondary carrier or the secondary cell; and the time information of enabling or disabling the secondary carrier or the secondary cell.

In one implementation, enabling or disabling the secondary carrier or the secondary cell comprises: enabling or disabling the state of the secondary carrier or the secondary cell; enabling or disabling a reference signal of the secondary carrier or the secondary cell; enabling or disabling the system information of the secondary carrier or secondary cell; and enabling or disabling a paging message of the secondary carrier or the secondary cell.

In one implementation, after receiving the fourth information, the execution module is further used for at least one of the following: associating the primary carrier or primary cell that is used to send the fourth information with the secondary carrier or the secondary cell; reading the configuration information of the secondary carrier or the secondary cell; saving the configuration information of the secondary carrier or the secondary cell; and updating the saved configuration information of the secondary carrier or the secondary cell.

In one implementation, the execution module 710 is further used for any one of the following: receiving the configuration update information of a secondary cell or a secondary carrier instructed by a system-information-update process corresponding to the secondary carrier or the secondary cell; receiving the configuration update information of a secondary cell or a secondary carrier instructed by the system-information-update process corresponding to a primary carrier or a primary cell.

In one implementation, when receiving configuration update information of a secondary cell or a secondary carrier instructed by a system-information-update process corresponding to the secondary carrier or the secondary cell, the configuration update information of the secondary carrier or the secondary cell is carried by at least one of paging message, paging-downlink paging instruction information, and short message in the system-information-update process.

In one implementation, the paging message or the short message further carries at least one of the following: target resource information, wherein the target resource information is the resource information used by a primary carrier or a primary cell to instruct or configure configuration information of the secondary carrier or the secondary cell; an instruction of a primary carrier or a primary cell for instructing or configuring system information; a frequency point of a primary carrier or a primary cell; the time-domain resource for the configuration of a secondary carrier or a secondary cell; and the frequency-domain resource for the configuration of a secondary carrier or a secondary cell.

In one implementation, when receiving configuration update information of a secondary cell or a secondary carrier instructed by a system-information-update process corresponding to a primary carrier or a primary cell, the configuration update information of the secondary carrier or the secondary cell is carried by at least one of paging message, paging-downlink paging instruction information, and short message in the system-information-update process.

In one implementation, at least one of the paging message, the paging-downlink paging instruction information, and the short message further carries the configuration information of physical downlink control information.

In one implementation, the paging message or the short message further carries at least one of the following: an instruction for updating the system information of a secondary carrier or a secondary cell; the time-domain resource for sending the configuration of a secondary carrier or a secondary cell; or the frequency-domain resource for sending the configuration of a secondary carrier or a secondary cell.

The communication apparatus in embodiments of the present application can be an electronic device, such as an electronic device with an operating system, or a component in an electronic device, such as an integrated circuit or a chip. The electronic device can be a terminal, or can be other devices other than a terminal. For example, the terminal can comprise but is not limited to the type of terminal 11 listed above, and other devices can be server, network attached storage (NAS), etc., which is not specifically limited in embodiments of the present application.

The communication apparatus 700 provided in embodiments of the present application can implement various processes implemented by method embodiments of FIG. 5 and achieve the same technical effect, this will not be repeated here.

As shown in FIG. 8, embodiments of the present application further provide a terminal 800, which comprises a processor 801 and a memory 802, the memory 802 stores a program or instruction that can run on the processor 801, the program or instruction, when executed by the processor 801, implements various steps of the above-mentioned communication method embodiment 500, and the same technical effect can be achieved, this will not be repeated here.

It should be noted that, the terminal in embodiments of the present application can comprise but is not limited to the type of terminal 11 listed above, and other devices can be server, network attached storage (NAS), etc., which is not specifically limited in embodiments of the present application.

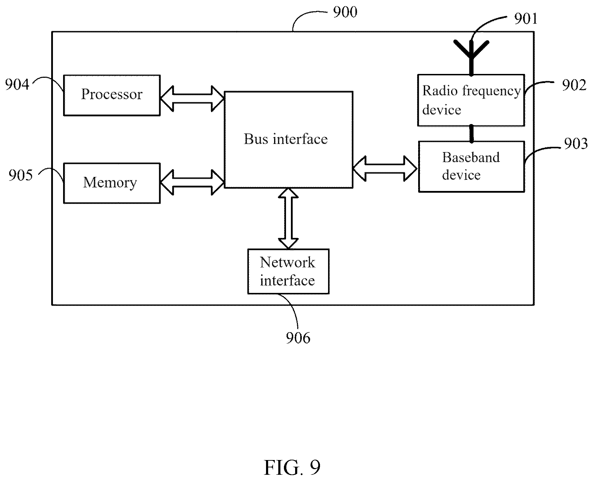

As shown in FIG. 9, embodiments of the present application further provide a network device 900, which comprises: an antenna 901, a radio frequency device 902, a baseband device 903, a processor 904, and a memory 905. The antenna 901 is connected to the radio frequency device 902. In the uplink direction, the radio frequency device 902 receives information by the antenna 901 and sends the received information to the baseband device 903 for processing. In the downlink direction, the baseband device 903 processes the information to be sent and sends it to the radio frequency device 902, and the radio frequency device 902 processes the received information and sends it out by the antenna 901.

The method executed by the network device in the above embodiments can be implemented in the baseband device 903 which comprises a baseband processor.

The baseband device 903 can comprise for example at least one baseband board, the baseband board is provided with a plurality of chips thereon. As shown in FIG. 9, one of the chips is for example a baseband processor, which is connected to the memory 905 by a bus interface, so as to call a program in the memory 905 and to perform the network device operations shown in the above method embodiment.

The network device can further comprise a network interface 906, which is for example a common public radio interface (CPRI).

Specifically, the network device 900 in embodiments of the present invention further comprises: instructions or programs stored in the memory 905 and executable on the processor 904, the processor 904 calls instructions or programs in the memory 905 so as to execute the method executed by various modules shown in FIG. 6 and achieve the same technical effect, this will not be repeated here.

Embodiments of the present application further provide a readable storage medium, which stores a program or instruction thereon, the program or instruction, when executed by the processor, implements various processes in the above-mentioned communication method embodiment, and achieve the same technical effect, this will not be repeated here.

The processor is the processor in the terminal described in the above embodiment. The readable storage medium comprises a computer readable storage medium, such as a computer read-only memory ROM, a random access memory RAM, a magnetic disk or an optical disk.

Embodiments of the present application further provide a chip, which comprises a processor and a communication interface, the communication interface is coupled to the processor, and the processor is used to execute program or instruction of a network device, so as to implement various processes of the above-mentioned communication method embodiment, and can achieve the same technical effect, this will not be repeated here.

It should be understood that the chip mentioned in embodiments of the present application can also be known as a system-level chip, a system chip, a chip system or a system-on-chip chip, etc.

Embodiments of the present application further provide a computer program product, which comprises a processor, a memory, and a program or instruction stored in the memory and executable on the processor, the program or instruction, when executed by the processor, implements various processes of the above-mentioned communication method embodiment and can achieve the same technical effect, this will not be repeated here.

Embodiments of the present application further provide a communication system, comprising: a terminal and a network device, the terminal can be used to execute the steps in the communication method embodiment 500 described above, and the network device can be used to execute the steps in the communication method embodiments 200-400 described above.

It should be noted that, as used herein, the terms "include", "comprise" or any other variations thereof are intended to cover a non-exclusive inclusion, such that a process, method, article, or apparatus that comprises a series of elements not only comprises those elements, but also comprises other elements that are not explicitly listed, or further comprises elements that are inherent to the process, method, article, or apparatus. Without further limitations, an element limited by "comprising a..." does not exclude the presence of other identical elements in the process, method, article, or device that comprises the element. In addition, it should be noted that the scope of the method and device in embodiments of this application is not limited to perform functions in the order shown or discussed, but may also include performing functions in a substantially simultaneous manner or in an opposite order according to the functions involved, for example, the described methods may be performed in a different order than described, and various steps may be added, omitted, or combined. Additionally, features described with reference to certain examples can be combined in other examples.

With the description of the above implementations, those skilled in the art can clearly understand that the above implementation methods can be realized via software and necessary general hardware platforms, as well as hardware, in many cases, the former is the preferred implementation. Based on such understanding, the technical solution of the this application essentially or the part contributing to the prior art may be embodied in the form of a computer software product, the computer software product is stored in a storage medium (such as a ROM/RAM, a magnetic disk, and an optical disk), and comprises a number of instructions for instructing a terminal (which may be a mobile phone, a computer, a server, an air conditioner, or a network device) to execute the methods described in various embodiments of this application.

The embodiments of the application are described above in conjunction with the accompanying drawings, but the application is not limited to the above-mentioned particular embodiments that are merely illustrative rather than limiting, a wide variety of forms can be made by a person skilled in the art under teachings of the application without departing from the spirit and scope of the application, and such forms all fall within the scope of the claims.

## Claims

1. A communication method, wherein the method comprises:
sending first information;
wherein the first information is used to instruct or configure at least one of the following:
sending a paging message by a secondary carrier or a secondary cell;
a network device stopping receiving uplink transmission; and
a network device stopping sending downlink transmission.

2. The method of claim 1, wherein the first information comprises at least one of the following:
first instruction information for instructing the secondary carrier or the secondary cell to send a paging message;
second instruction information for instructing a terminal to monitor a paging message on the secondary carrier or the secondary cell;
paging resource configuration information corresponding to the secondary carrier or the secondary cell;
time information of a paging message monitored by the terminal on the secondary carrier or the secondary cell;
configuration information of a secondary carrier or a secondary cell that has the same spatial characteristics as those of a primary carrier or a primary cell;
time information of the network device stopping receiving uplink transmission; and
time information of the network device stopping sending downlink transmission.

3. The method of claim 2, wherein
the time information of a paging message monitored by the terminal on the secondary carrier or the secondary cell comprises at least one of beginning time, ending time, duration, and period of a paging message monitored by the terminal on the secondary carrier or the secondary cell;
the time information of the network device stopping receiving uplink transmission comprises at least one of beginning time, ending time, duration, and period of the network device stopping receiving uplink transmission; and
the time information of the network device stopping sending downlink transmission comprises at least one of beginning time, ending time, duration, and period of the network device stopping sending downlink transmission.

4. The method of claim 1, wherein the method further comprises:
sending second information;
wherein the second information is used to instruct or configure at least one of the following:
the secondary carrier or the secondary cell supports the terminal for residing in;
the secondary carrier or the secondary cell supports terminal for cell reselection; and
the secondary carrier or the secondary cell supports itself as a candidate cell.

5. The method of claim 4, wherein the second information comprises at least one of the following:
paging configuration information of the secondary carrier or the secondary cell; and
reference signal configuration information of the secondary carrier or the secondary cell.

6. The method of any one of claims 1-5, wherein any one of the following conditions is met:
the first information instructs sending-priority information of a paging message on the secondary carrier or the secondary cell;
a primary carrier or a primary cell meets cell residence conditions; and
a primary carrier or a primary cell meets an S criterion for cell reselection.

7. The method of claim 6, wherein the sending-priority information of a paging message on the secondary carrier or the secondary cell comprises any one of the following:
a priority of the reference signal of the primary carrier or the primary cell is higher than a priority of the paging message of the secondary carrier or the secondary cell; and
a priority of system information of the primary carrier or the primary cell is lower than a priority of the paging message of the secondary carrier or the secondary cell.

8. The method of any one of claims 1-7, wherein the method further comprises:
sending measurement configuration information by the secondary carrier or the secondary cell, the measurement configuration information is used by the terminal to measure the reference signal sent by the primary carrier or the primary cell.

9. The method of claim 8, wherein the measurement configuration information comprises at least one of the following:
frequency point information of the reference signal of the primary carrier or the primary cell;
time-domain configuration information of the reference signal of the primary carrier or the primary cell;
association of the primary carrier or the primary cell with the reference signal; and
the primary carrier or the primary cell has a same quasi co-location (QCL) relationship as the secondary carrier or the secondary cell.

10. The method of claim 8, wherein in case where the secondary cell or the secondary carrier has no reference signals, the sending-priority of the reference signal of the primary carrier or the primary cell is higher than the sending-priority of the paging message of the secondary carrier or the secondary cell.

11. The method of any one of claims 1-10, wherein the method further comprises:
sending third information;
wherein the third information is used to instruct or configure the terminal to send a wake-up signal WUS on a secondary carrier or a secondary cell.

12. The method of claim 11, wherein the third information comprises at least one of the following:
sending moment of the WUS;
an offset value of the WUS; and
sending time window of the WUS.

13. The method of claim 11, wherein the method further comprises:
receiving the WUS sent by the terminal on the secondary carrier or the secondary cell; and
sending a synchronization signal SSB or a paging message on the secondary carrier or the secondary cell.

14. The method of any one of claims 1-13, wherein the method further comprises:
sending fourth information;
wherein the fourth information is used to instruct or configure at least one of the following:
configuration information of the secondary carrier or the secondary cell;
configuration update information of the secondary carrier or the secondary cell;
enabling or disabling the secondary carrier or the secondary cell; and
time information of enabling or disabling the secondary carrier or the secondary cell.

15. The method of claim 13, wherein sending fourth information comprises at least one of the following:
taking the secondary cell or the secondary carrier as a neighboring cell, and sending the fourth information.

16. The method of claim or 14, wherein enabling or disabling the secondary carrier or the secondary cell comprises:
enabling or disabling the secondary carrier or the secondary cell;
enabling or disabling a reference signal of the secondary carrier or the secondary cell;
enabling or disabling system information of the secondary carrier or the secondary cell; and
enabling or disabling a paging message of the secondary carrier or the secondary cell.

17. The method of any one of claims 1-16, wherein the method further comprises any one of the following:
instructing configuration update information of a secondary cell or a secondary carrier by a system-information-update process corresponding to the secondary carrier or the secondary cell; and
instructing configuration update information of a secondary cell or a secondary carrier by a system-information-update process corresponding to a primary carrier or a primary cell.

18. The method of claim 17, wherein in case where instructing configuration update information of a secondary cell or a secondary carrier by a system-information-update process corresponding to the secondary carrier or the secondary cell, the configuration update information of the secondary carrier or the secondary cell is carried by at least one of paging message, paging-downlink paging instruction information, and short message in the system-information-update process.

19. The method of claim 18, wherein the paging message or the short message further carries at least one of the following:
target resource information, wherein the target resource information is the resource information used by a primary carrier or a primary cell to instruct or configure the configuration information of the secondary carrier or the secondary cell;
an instruction for a primary carrier or a primary cell to send system information of a secondary carrier or a secondary cell;
a frequency point of a primary carrier or a primary cell;
time-domain resource of a primary carrier or a primary cell for sending the configuration of a secondary carrier or a secondary cell; and
frequency-domain resource of a primary carrier or a primary cell for sending the configuration of a secondary carrier or a secondary cell.

20. The method of claim 17, wherein in case where instructing configuration update information of a secondary cell or a secondary carrier by a system-information-update process corresponding to a primary carrier or a primary cell, the configuration update information of the secondary carrier or the secondary cell is carried by at least one of paging message, paging-downlink paging instruction information, and short message in the system-information-update process.

21. The method of claim 19, wherein at least one of the paging message, the paging-downlink paging instruction information, and the short message further carries configuration information of physical downlink control information.

22. The method of claim 19, wherein the paging message or the short message further carries at least one of the following:
an instruction for updating system information of a secondary carrier or a secondary cell;
time-domain resource for sending the configuration of a secondary carrier or a secondary cell; and
frequency-domain resource for sending the configuration of a secondary carrier or a secondary cell.

23. A communication method, wherein the method comprises:
receiving first information;
wherein the first information is used to instruct or configure at least one of the following:
sending a paging message by a secondary carrier or a secondary cell;
a network device stopping receiving uplink transmission; and
a network device stopping sending downlink transmission.

24. The method of claim 23, wherein the first information comprises at least one of the following:
first instruction information for instructing the secondary carrier or the secondary cell to send a paging message;
second instruction information for instructing a terminal to monitor a paging message on the secondary carrier or the secondary cell;
paging resource configuration information corresponding to the secondary carrier or the secondary cell;
time information of a paging message monitored by the terminal on the secondary carrier or the secondary cell;
configuration information of a secondary carrier or a secondary cell that has the same spatial characteristics as those of a primary carrier or a primary cell;
time information of the network device stopping receiving uplink transmission; and
time information of the network device stopping sending downlink transmission.

25. The method of claim 24, wherein
the time information of a paging message monitored by the terminal on the secondary carrier or the secondary cell comprises at least one of beginning time, ending time, duration, and period of a paging message monitored by the terminal on the secondary carrier or the secondary cell;
the time information of the network device stopping receiving uplink transmission comprises at least one of beginning time, ending time, duration, and period of the network device stopping receiving uplink transmission; and
the time information of the network device stopping sending downlink transmission comprises at least one of beginning time, ending time, duration, and period of the network device stopping sending downlink transmission.

26. The method of claims 23, wherein after receiving first information, the method further comprises:
performing at least one of the following according to the first information:
when in an idle state or an inactive state, residing in or reselecting to the secondary carrier or the secondary cell, and monitoring a paging message on the secondary carrier or the secondary cell;
stopping monitoring downlink transmission within first time;
stopping measuring a reference signal within first time;
stopping wireless-link monitoring of a reference signal within first time;
stopping beam-failure detection or link-recovery detection of a reference signal within first time;
stopping sending uplink transmissions within first time;
switching to a default bandwidth part (BWP) at beginning moment of first time;
when transmission time of uplink transmission overlaps with the first time, retransmitting the uplink transmission or determining the uplink transmission as failure;
wherein the first time is determined according to the time information of the network device stopping receiving uplink transmission and/or the time information of the network device stopping sending downlink transmission.

27. The method of claims 26, wherein stopping monitoring downlink transmission within first time comprises:
stopping monitoring downlink transmission within running time of a first timer;
wherein starting time of the first timer is determined according to the time information of the network device stopping sending downlink transmission, and the running time of the first timer is associated with the first time.

28. The method of claims 26, wherein stopping monitoring downlink transmission within first time comprises:
where the downlink transmission is designated downlink transmission, a second timer or response window corresponding to the designated downlink transmission is stopped at the beginning moment of the first time, and a second timer or response window corresponding to the designated downlink transmission is started at ending moment of the first time.

29. The method of claims 28, wherein in case where the monitoring time corresponding to the designated downlink transmission overlaps with the first time, a duration of the second timer or response window corresponding to the designated downlink transmission is extended by the first time.

30. The method of claim 28 or 29, wherein
in case where the designated downlink transmission is physical downlink control channel PDCCH corresponding to random access response RAR, the second timer or response window comprises ra-response window and/or ra-contention resolution timer;
in case where the designated downlink transmission is PDCCH corresponding to preconfigured uplink resource PUR, the second timer or response window comprises PUR-response window and/or PUR-timer; and
in case where the designated downlink transmission is PDCCH corresponding to message 3, the second timer or response window comprises msgB-response window.

31. The method of claim 26, wherein stopping wireless-link monitoring of a reference signal within first time comprises:
there is at least one reference signal that is not sent within an evaluation period of the wireless link, a number of evaluation periods of the wireless link is increased, or an evaluation period of the wireless link is extended by the first time.

32. The method of claim 26, wherein stopping beam-failure detection or link-recovery detection of a reference signal within the time comprises:
there is at least one reference signal that is not sent within an evaluation period of the beam-failure detection or link-recovery detection, a number of evaluation periods of the beam-failure detection or link-recovery detection is increased, or an evaluation period of the beam-failure detection or link-recovery detection is extended by the first time.

33. The method of claim 26, wherein stopping sending uplink transmission within first time comprises:
stopping sending the uplink transmission within running time of a third timer;
wherein starting time of the third timer is determined according to the time information of the network device stopping receiving uplink transmission, and the running time of the third timer is associated with the first time.

34. The method of claim 26, wherein stopping sending uplink transmission within first time comprises:
where the uplink transmission is designated uplink transmission and running time of a fourth timer corresponding to the designated uplink transmission overlaps with the first time, the running time of the fourth timer is extended by the first time, or the running time of the fourth timer is extended by a predetermined number of transmission periods, wherein the transmission period is the transmission period of the designated uplink transmission, and the predetermined number is determined according to sending moment of the designated uplink transmission that is comprised in the first time.

35. The method of claim 26, wherein the method further comprises:
receiving second information;
wherein the second information is used to instruct or configure at least one of the following:
the secondary carrier or the secondary cell supports the terminal for residing in;
the secondary carrier or the secondary cell supports the terminal for reselection;
the secondary carrier or the secondary cell supports itself as a candidate cell.

36. The method of claim 35, wherein residing in or reselecting to the secondary carrier or the secondary cell comprises at least one of the following:
residing in or reselecting to the secondary carrier or the secondary cell according to the second information; and
residing in or reselecting to the secondary carrier or the secondary cell according to a terminal identifier.

37. The method of claim 23, wherein the method further comprises:
receiving measurement configuration information sent by the secondary carrier or the secondary cell; and
measuring a reference signal sent by a primary carrier or a primary cell according to the measurement configuration information.

38. The method of any one of claims 23-37, wherein the method further comprises:
performing at least one of the following when target conditions are met:
during cell reselection, lowering a priority of a target cell that meets the target conditions;
postponing service-initiation timing on a target cell or target cell access timing;
wherein the target conditions comprise at least one of the following:
a network device corresponding to the target cell sends a paging message by a secondary carrier or a secondary cell;
a network device corresponding to the target cell stops receiving uplink transmission; and
a network device corresponding to the target cell stops sending downlink transmission.

39. The method of claim 38, wherein lowering a priority of a target cell that meets the target conditions comprises at least one of the following:
lowering a priority of the target cell by calculating a cell-criterion R value;
lowering a priority of the target cell that meets the target conditions within second time, wherein the second time is determined according to the time information of the network device stopping receiving uplink transmission and/or the time information of the network device stopping sending downlink transmission.

40. The method of claim 39, wherein lowering a priority of the target cell by calculating a cell-criterion R value comprises:
subtracting a predetermined offset value from a cell-criterion R value of the target cell so as to obtain a target R value; and
determining a priority of the target cell according to the target R value.

41. The method of claim 39, wherein lowering a priority of the target cell that meets the target conditions within second time comprises:
starting a fifth timer at beginning moment of the second time;
during running of the fifth timer, lowering a priority of the target cell that meets the target conditions; and
when the fifth timer times out, restoring the priority of the target cell.

42. The method of any one of claims 23-36, wherein the method further comprises:
receiving third information;
wherein the third information is used to instruct or configure a terminal to send a wake-up signal WUS on the secondary carrier or the secondary cell.

43. The method of claim 42, wherein the method further comprises:
sending a WUS by the secondary carrier or the secondary cell, wherein the WUS is used to request the network device to send a synchronization signal SSB or a paging message on the secondary carrier or the secondary cell.

44. The method of any one of claims 23-43, wherein receiving first information comprises:
receiving the first information by an access stratum, and notifying a non-access stratum of the first information by the access stratum.

45. The method of any one of claims 23-44, wherein prior to receiving first information, the method further comprises:
receiving fourth information;
wherein the fourth information is used to instruct or configure at least one of the following:
configuration information of the secondary carrier or the secondary cell;
configuration update information of the secondary carrier or the secondary cell;
enabling or disabling the secondary carrier or the secondary cell; and
time information of enabling or disabling the secondary carrier or the secondary cell.

46. A network device, wherein the network device comprises a processor and a memory, the memory stores a program or instruction that can run on the processor, and the program or instruction, when executed by the processor, implements the steps of the communication method of any one of claims 1-22.

47. A terminal, wherein the terminal comprises a processor and a memory, the memory stores a program or instruction that can run on the processor, and the program or instruction, when executed by the processor, implements the steps of the communication method of any one of claims 23-45.

48. A readable storage medium, wherein the readable storage medium stores a program or instruction thereon, and the program or instruction, when executed by the processor, implements the communication method of any one of claims 1-22, or implements the steps of the communication method of any one of claims 23-45.
